# EUROPEAN PATENT SPECIFICATION

(11) **EP 3 678 208 B1**
(45) Date of publication and mention of the grant of the patent: **09.03.2022**
(21) Application number: 19205799.0
(22) Date of filing: 29.10.2019
(51) Int. Cl.: H01M 10/04, H01M 50/103, H01M 50/20, H01M 50/26, H01M 50/543

(54) **BATTERY MODULE, BATTERY PACK, AND VEHICLE**
BATTERIEMODUL, BATTERIEPACK UND FAHRZEUG
MODULE DE BATTERIE, BLOC BATTERIE ET VÉHICULE

(30) Priority: 30.12.2018 CN 201811649795
(43) Date of publication of application: 08.07.2020
(73) Proprietor: Contemporary Amperex Technology Co., Limited, Jiaocheng District Ningde City Fujian 352100 (CN)
(72) Inventor: JIN, Haizu, Ningde City, Fujian 352100 (CN); ZHOU, Linggang, Ningde City, Fujian 352100 (CN); SHI, Dongyang, Ningde City, Fujian 352100 (CN); WANG, Peng, Ningde City, Fujian 352100 (CN); LIN, Yongshou, Ningde City, Fujian 352100 (CN); XIANG, Yanhuo, Ningde City, Fujian 352100 (CN)
(74) Representative: Novagraaf International SA

(56) References cited:
- EP-A1- 2 413 421
- US-A1- 2011 183 171
- US-A1- 2016 218 388
- US-A1- 2016 293 922
- ROBERT SCHRÖDER ET AL: "Comparatively assessing different shapes of lithium-ion battery cells", PROCEDIA MANUFACTURING, vol. 8, 2017, pages 104-111, XP055698386, DOI: https://doi.org/10.1016/j.promfg.2017.02.0 13
- ARORA SHASHANK ET AL: "Review of mechanical design and strategic placement technique of a robust battery pack for electric vehicles", RENEWABLE AND SUSTAINABLE ENERGY REVIEWS, ELSEVIERS SCIENCE, NEW YORK, NY, US, vol. 60, 18 March 2016 (2016-03-18), pages 1319-1331, XP029505300, ISSN: 1364-0321, DOI: 10.1016/J.RSER.2016.03.013

## Description

### TECHNICAL FIELD

The present disclosure generally relates to the field of energy storage devices, and in particular, to a battery module, a battery pack, and a vehicle.

### BACKGROUND

A secondary battery has advantages of high energy density, long service life, energy saving and being environmentally friendly, and is widely used in various fields such as new energy vehicles, energy storage power stations and the like.

A plurality of battery cells are usually stacked together and electrically connected to each other through bus bars to form a battery module. In order to fix the plurality of battery cells, end plates and side plates are usually provided in the battery module. The end plates and the side plates are connected to each other to form a module frame, and the plurality of battery cells are fixed within the module frame.

Battery cells may undergo expansive deformation during use, and the expansive deformation is particularly drastic in a direction of the longest dimension of the battery module. To limit the expansion of the battery cells, a volume of end plates in conventional battery modules are relatively large, resulting in a low energy density of the battery module, this is disadvantageous for weight reduction of the battery module.

US 2016/218388 A1 discloses a battery module, which includes a secondary battery unit including a plurality of secondary batteries arranged with a predetermined interval in horizontal and vertical directions. Specifically, The first barrier 121a separates the second and fourth secondary batteries 112 and 114 arranged in the horizontal direction from each other by the predetermined distance d1, the second barrier 122a separates the first and secondary batteries 111 and 113 arranged in the horizontal direction from each by the predetermined distance d1, the third barrier 123 separates the first and second batteries 111 and 112 and the third and fourth secondary batteries 113 and 114 arranged in the vertical direction from each other by a predetermined distance d2. Although providing multiple barriers between the secondary batteries may reduce the expansion force of the battery module, the energy density of the battery module is also reduced. In other words, the battery module cannot obtain a higher energy density.

US 2016/0293922 A1 discloses a non-aqueous electrolyte secondary battery, which includes a separator and an interposed layer. Further, it teaches that the interposed layer must be arranged the separator and the electrode composite material layer, so that adhesiveness allowing resistance to repeated high-load charging and discharging may be realized.

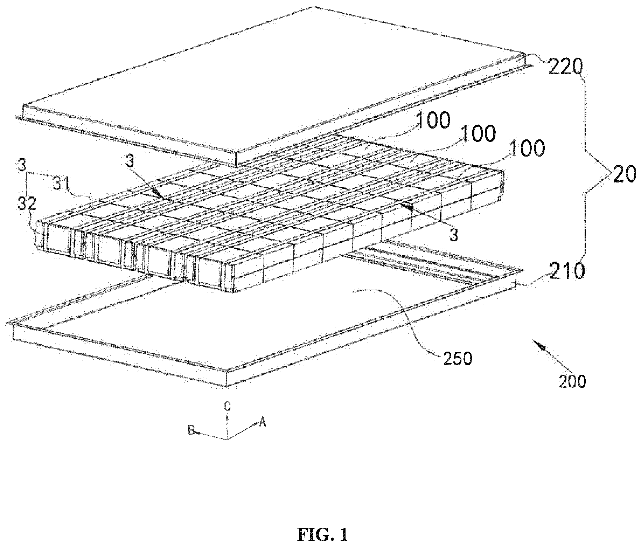

US 2011/183171 A1 discloses a secondary battery, where the battery cell is arranged in the vertical direction Z (FIG.1), so that the direction that the electrode assembly applies the maximum expansion force to the battery case is toward the horizontal direction Y. As a result, the maximum expansion force of the battery module is difficult to be reduced.

Robert schroder et al (Comparatively assessing different shapes of lithium-ion battery cells, Procedia Manufacturing 8(2017), pages 104-111) discloses a detailed overview on the advantages and disadvantages of different shapes of lithium-ion batteries, and indicates that the outer shape and inner cell structure highly influence the manufacturing process and its costs.

EP 2413421 A1 discloses an electric storage module, where the cooling plate 15 is located between the first battery row and the second battery row (FIG. 1), which may assure better cooling efficiency and enable overall miniaturization.

### SUMMARY

In a first aspect, some embodiments of the present disclosure provide a battery module, including:
a plurality of battery cells arranged in a horizontal direction, and
a plurality of bus bars electrically connected to the plurality of battery cells;
each of the battery cells includes a battery case and an electrode assembly accommodated in the battery case;
the electrode assembly include a first electrode sheet, a second electrode sheet, and a separator disposed between the first and second electrode sheets; and
the electrode assembly has a wound structure, an outer surface of the electrode assembly includes two flat faces that face each other in a vertical direction; or
the electrode assembly has a laminated structure, the first and second electrode sheets and the separator are stacked in the vertical direction;
where a dimension of the battery module in the horizontal direction is larger than a dimension in the vertical direction.
the battery module further includes:
   a tying band, and
   two end plates;
the tying band comprises two long sides facing a first surface and extending in a horizontal direction, and two short sides facing a second surface and extending in the vertical direction;
the two end plates respectively are arranged at two ends of the plurality of battery cells in the horizontal direction, and the tying band surrounds an outer periphery of the plurality of battery cells and the two end plates;
a surface of the two end plates away from the plurality of the battery cells is provided with a tying band limiting slot, the tying band limiting slot extends along the vertical direction, and the two short sides of the tying band are received in the tying band limiting slot; or
the two end plates are internally provided with a tying band limiting hole, the tying band limiting hole extends along the vertical direction, and the two short sides of the two tying bands pass through the tying band limiting hole.

In some embodiments of the present disclosure, the battery case includes two first surfaces and two second surfaces, an area of the first surface is larger than an area of the second surface; the two second surfaces of each of the battery cells face each other in the horizontal direction, and the two first surfaces of each of the battery cells face each other in the vertical direction.

In some embodiments of the present disclosure, each of the battery cell includes a plurality of the electrode assemblies, and the plurality of the electrode assemblies are stacked in the vertical direction.

In some embodiments of the present disclosure, in the battery module, the number of layers of the battery cells stacked in the vertical direction is about one to five layers, preferably two or three layers.

In some embodiments of the present disclosure, the battery case further includes a third surface, the two first surfaces and the two second surfaces collectively surround the third surface, and the area of the first surface is larger than an area of the third surface.

In some embodiments of the present disclosure, the battery cell further includes a first electrode terminal and a second electrode terminal, and the first electrode terminal and the second electrode terminal are both arranged on the third surface.

In some embodiments of the present disclosure, the battery module includes at least two tying bands, and the tying bands are spaced apart.

In some embodiments of the present disclosure, the tying band includes a first end and a second end, the first end and the second end are stacked in the vertical direction to form a joint portion, and the joint portion and the first surface face each other. Alternatively, in some embodiments of the present disclosure, the tying band includes a first end and a second end, the first end and the second end are stacked in the horizontal direction to form a joint portion, and the joint portion and the second surface face each other.

In some embodiments of the present disclosure, the joint portions of the at least two tying bands are arranged in a straight line.

In some embodiments of the present disclosure, a ratio of the dimension of the battery module in the horizontal direction to the dimension of the battery module in the vertical direction is greater than or equal to four.

In a second aspect, some embodiments of the present disclosure further provide a battery pack, including a housing having an accommodating chamber and the plurality of the battery modules as described above, and the plurality of battery modules are arranged in the accommodating chamber.

In a third aspect, some embodiments of the present disclosure further provide a vehicle, including a vehicle body and the battery pack as described above, and the battery pack is arranged in the vehicle body.

### BRIEF DESCRIPTION OF DRAWINGS

In order to facilitate a full understanding of the present disclosure, reference is now made to the accompanying drawings, in which like elements are referenced with like numerals. These drawings should not be construed as limiting the present disclosure, but are intended to be illustrative only. The drawings are not necessarily to scale, or inclusive of all elements of a device, emphasis instead generally being placed upon illustrating the concepts, structures, and techniques sought to be protected herein.
FIG. 1 is an exploded view of a battery pack according to an embodiment of the present disclosure.
FIG. 2 is a cross-sectional view of a battery pack showing a battery module and a housing being bonded together according to an embodiment of the present disclosure.
FIG. 3 an enlarged view of portion A in FIG. 2.
FIG. 4 is a schematic view of a battery module according to an embodiment of the present disclosure.
FIG. 5 is a schematic structural view of a battery cell according to an embodiment of the present disclosure.
FIG. 6 is an exploded view of a battery cell according to an embodiment of the present disclosure.
FIG. 7A is a cross-sectional view of an electrode assembly of a wound structure along the D-D line direction in FIG. 6, according to an embodiment of the present disclosure.
FIG. 7B is a schematic view of the outline of the cross section of an electrode assembly of a wound structure along the D-D line direction in FIG. 6.
FIG. 8 is a cross-sectional view of an electrode assembly of a laminated structure along the D-D line direction in FIG. 6, according to an embodiment of the present disclosure.
FIG. 9 is a schematic view of a battery module according to an embodiment of the present disclosure.
FIG. 10 is an exploded view of the battery module shown in FIG. 9.
FIG. 11 is a schematic structural view of an end plate according to an embodiment of the present disclosure.
FIG. 12 is a schematic structural view of an end plate according to an embodiment of the present disclosure.
FIG. 13 is a cross-sectional view of a head-to-tail joint portion of a tying band, according to some embodiments of the present disclosure.

List of reference signs in drawings are as follows.
- 100:: battery module
- 1:: battery cell
- 11:: electrode assembly
- 12:: battery case
- 13:: cover assembly
- 131:: first electrode terminal
- 132:: second electrode terminal
- 14:: adapter piece
- 111:: first electrode sheet
- 112:: second electrode sheet
- 113:: separator
- 114:: flat face
- 115:: narrow face
- 110:: first surface
- 120:: second surface
- 130:: third surface
- 2:: end plate
- 21:: main body of the end plate
- 22:: tying band limiting slot
- 23:: fixed limiting hole
- 24:: first protrusion
- 200:: battery pack
- 20:: housing
- 210:: upper housing cover
- 220:: lower housing
- 220-1:: second protrusion
- 230:: top glue
- 240:: bottom glue
- 250:: accommodating chamber
- 3:: tying band
- 31:: long side
- 32:: short side
- 310:: first end
- 320:: second end
- 330:: joint portion
- 4:: insulation part
- 5:: bus bar

### DETAILED DESCRIPTION

The battery cell, battery module, battery pack, and vehicle according to the present disclosure will be further described in detail below with reference to the accompanying drawings.

In the description of the present disclosure, the terms "first" and "second" are used for descriptive purposes only, and should not be construed as indicating or implying the relative importance thereof, unless otherwise specified or explained. The term "a plurality of' means two or more; the terms "connected", "fixed" and the like should be understood broadly. For example, "connected" may be a fixed connection, or a detachable connection, or an integral connection, or an electrical connection; it may be directly connected or indirectly connected though an intermediate medium. For a person of ordinary skill in the art, the specific meanings of the above terms in the present disclosure may be understood in their specific contexts.

In the description of the present disclosure, the direction indicated by arrow A in all the drawings is a length direction, the direction indicated by arrow B is a width direction, and the direction indicated by arrow C is the vertical direction. The horizontal direction is a direction parallel to a horizontal plane, and may be the length direction or the width direction. In addition, the horizontal direction includes not only a direction that is absolutely parallel to the horizontal plane, but also a direction generally parallel to the horizontal plane as conventionally recognized in engineering. The vertical direction is a direction perpendicular to the horizontal plane, and the vertical direction includes not only a direction absolutely perpendicular to the horizontal plane, but also a direction generally perpendicular to the horizontal plane as conventionally recognized in engineering. In addition, the terms "upper", "lower", "top", "bottom" and the like are understood relative to the vertical direction.

In an embodiment of the present disclosure, a vehicle is provided, the vehicle includes a vehicle body and a battery pack, the battery pack is disposed in the vehicle body. The battery pack is a battery pack 200 as showed in FIG. 1. The vehicle may be a new energy vehicle, which may be an electric vehicle, a hybrid vehicle or a range extended electric vehicle (REEV). A driving motor may be arranged in the main body of the vehicle, and the driving motor may be electrically connected with the battery pack. The battery pack provides electric energy, and the driving motor may be connected to the vehicle wheels of the vehicle body via a transmission mechanism, so as to drive the vehicle to move. In some embodiments of the present disclosure, the battery pack may be disposed horizontally at the bottom portion of the vehicle main body.

In an embodiment of the present disclosure, a vehicle is provided. The vehicle including a vehicle body and a battery pack, the battery pack is disposed on the vehicle body, and the battery pack is a battery pack 200 as shown in FIG 1. Where the vehicle is a new energy vehicle, which may be a pure electric vehicle, or a hybrid vehicle or an extended-range vehicle. A driving motor is arranged in the vehicle body, and the driving motor is electrically connected with the battery pack, where the battery pack provides electric energy. The driving motor is coupled to wheels on the vehicle body via a transmission mechanism to drive the vehicle to move. Preferably, the battery pack is horizontally disposed at a bottom of the vehicle body.

FIG. 1 is an exploded view of the battery pack 200. The battery pack 200 includes a housing 20 and a plurality of battery modules 100. The housing 20 includes an upper housing cover 220 and a lower housing 210. The upper housing cover 220 and the lower housing 210 of the battery pack 200 are separated in FIG. 1.

The lower housing 210 and the upper housing cover 220 cooperate with each other to form an enclosed housing having an accommodating chamber 250, and the plurality of battery modules 100 are located within the accommodating chamber 250. In some embodiments of the present disclosure, the housing 20 may be made of metal materials or non-metal material. Exemplary metal materials may include, but not limited to aluminum and aluminum alloy. The plurality of battery modules 100 may be arranged side by side along the length direction of the battery pack 200, or the plurality of the battery modules 100 may be arranged side by side in the width direction of the battery pack 200. The battery module 100 has a plurality of battery cells 1 (not shown in FIG. 1), and the plurality of the battery cells 1 in battery module 100 may be wrapped together through a tying band 3, wherein one battery module 100 may be provided with two or more tying bands 3. The tying band 3 may include two long sides 31 and two short sides 32, wherein the long sides 31 may extend in a horizontal direction (for example, the length direction indicated by arrow A), and the short sides 32 may extend in a vertical direction (the direction indicated by arrow C).

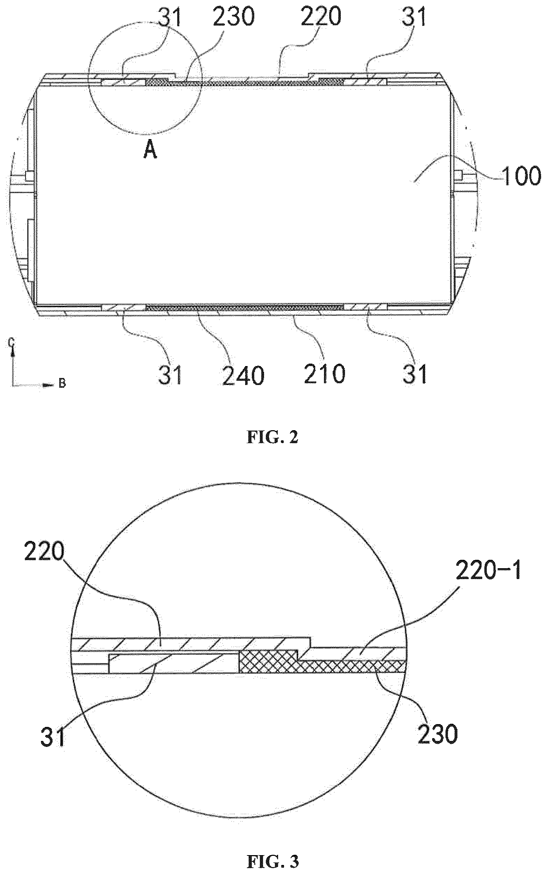

FIG. 2 is a cross-sectional view of a battery pack showing the binding of the battery module 100 and the housing 20 according to an embodiment of the present disclosure. A top glue 230 is disposed between a top portion of the battery module 100 and the upper housing cover 220 of housing 20. A bottom glue 240 is disposed between a bottom portion of the battery module 100 and the lower housing 210 of the housing 20. In this way, the battery module 100 may be connected and fastened to the housing 20 through the top glue 230 and the bottom glue 240.

In some embodiments of the present disclosure, the top glue 230 and the bottom glue 240 may be disposed between the long sides 31 of two adjacent tying bands on the battery module 100. Accordingly, the long sides 31 of the two adjacent tying bands 3 may restrict the top glue 230 and the bottom glue 240 from overflowing before they are solidified, such that the top glue 230 may be ensured to be effectively bonded to the top portion of the battery module 100 and the upper housing cover 220, and bottom glue 240 may be ensured to be effectively bonded to the bottom portion of the battery module 100 and the lower housing 210.

The battery module 100 may be connected to the housing 20 through the top glue 230 and the bottom glue 240, such that the battery module 100 and the housing 20 may form an integral body. The connection strength between the housing 20 and the battery module 100, therefore, may be enhanced and the overall stiffness of the battery pack may be improved.

In some embodiments of the present disclosure, a surface of the tying band 3 may be in contact with a first surface 110 of the battery cell 1, an inner surface of the upper housing cover 220 may be in contact with the other surface of the tying band 3. Accordingly, the upper housing cover 220, the tying band 3 and the battery cell 1 may be in close contact with each other. The top glue 230 may be located within a space formed by the long sides 31 of the two adjacent tying bands 3, the upper surface 110 of the battery cell 1, and the inner surface of upper housing cover 220. A thickness of the top glue 230 may be equal to a thickness of tying band 3. Accordingly, the thickness of the top glue 230 may be accurately controlled. Similarly, the long sides 31 of the adjacent tying bands 3 located at the bottom of the battery cell 1 may also be in close contact with the lower housing 210 and the surface of the battery cell 1, such that a thickness of the bottom glue 240 located at the bottom portion of the battery cell 1 may be equal to the thickness of the tying band 3.

FIG. 3 is an enlarged view of portion A shown in FIG. 2. The inner surface of the upper housing cover 220 is provided with a downward second protrusion 220-1, and the second protrusion 220-1 may be bonded to the top glue 230. The second protrusion 220-1 is located between the long sides 31 of the two adjacent tying bands 3, that is, the second protrusion 220-1 protrudes toward a position of the top glue 230. A separate space for accommodating top glue 230 may be kept between the end of the second protrusion 220-1 and the upper surface of the battery cell 1. In this way, the thickness of the top glue 230 is smaller than the thickness of the tying band 3. The second protrusion 220-1 on the upper housing cover 220 may be formed by means of a die stamping, that is, stamping toward the upper surface of the upper housing cover 220 by the die, such that the upper surface of the upper housing cover 220 may be concave downward and the lower surface thereof may be convex downward. In some embodiments of the present disclosure, the second protrusion 220-1 may be formed by providing a reinforcing sheet or a reinforcing strip on the upper surface of the upper housing cover 220. The second protrusion 220-1 may increase the structural strength of the upper housing cover 220. On the other hand, the second protrusion 220-1 may protrude toward the position of the top glue 230 to press the top glue 230 downward to make the top glue 230 in full contact with the battery cell 1 and the tying band 3, ensuring the bonding strength between the top glue 230, the battery cell 1 and the tying band 3.

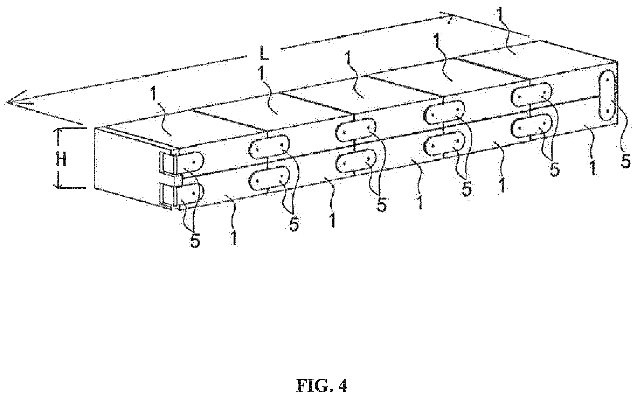

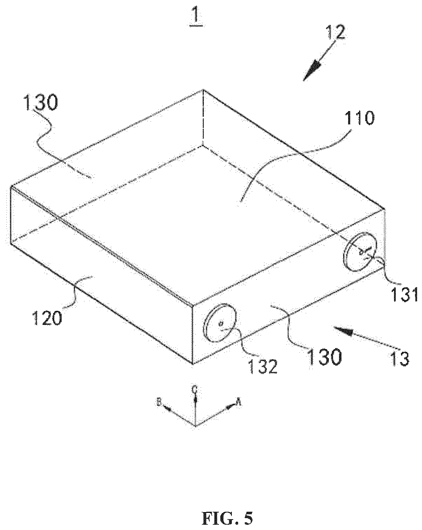

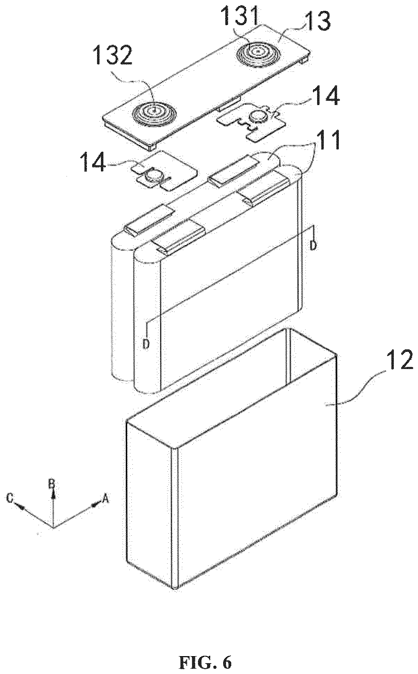

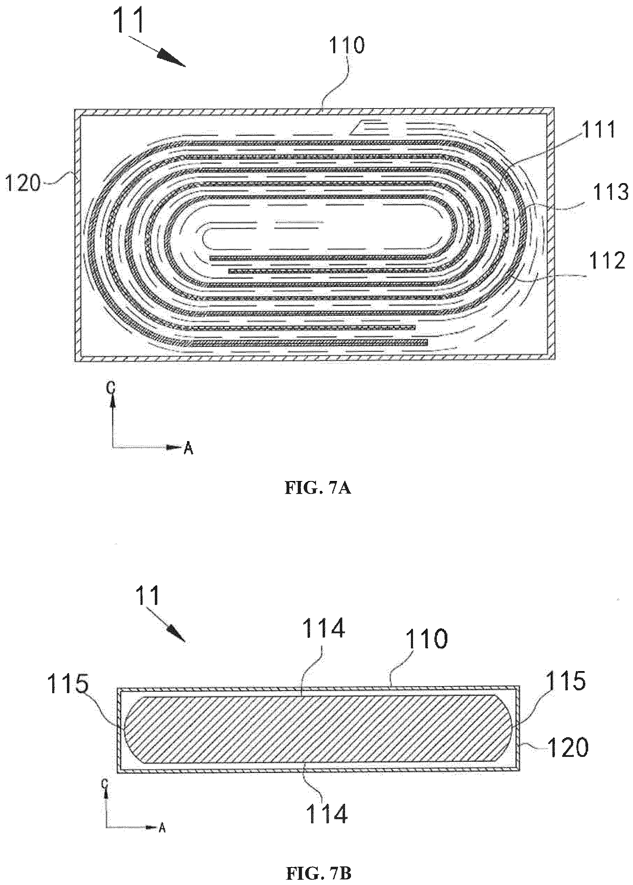

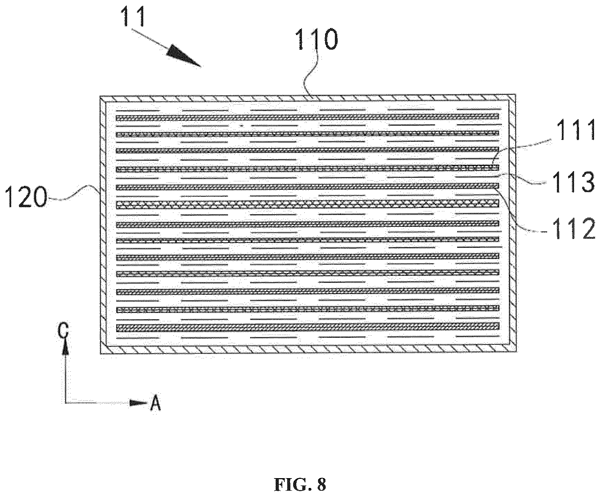

FIG. 4 is a schematic structural view of a battery module according to an embodiment of the present disclosure. FIG. 5 is a schematic structural view of a battery cell according to an embodiment of the present disclosure. FIG. 6 is an exploded view of a battery cell according to an embodiment of the present disclosure. FIG. 7A is a cross-sectional view of an electrode assembly of a wound structure along the D-D line direction shown in FIG. 6, according to an embodiment of the present disclosure. FIG. 7B is a schematic view of the outline of the cross section of an electrode assembly of a wound structure along the D-D line direction shown in FIG. 6, according to an embodiment of the present disclosure. FIG. 8 is a cross-sectional view of an electrode assembly of a laminated structure along the D-D line direction shown in FIG. 6, according to an embodiment of the present disclosure.

As shown in FIG. 4, the battery module 100 includes a plurality of the battery cells 1 arranged in a horizontal direction and a plurality of bus bars 5 electrically connected to the plurality of the battery cells 1. The battery cell 1 may be a secondary battery that may be repeatedly charged and discharged, and the plurality of the battery cells 1 are connected in series, in parallel, or in mixed connection through the bus bar 5. A dimension L of the battery module 100 in the horizontal direction is larger than a dimension H of the battery module in the vertical direction.

Herein the type of battery (i.e., the battery cell) may include, but is not limited to, lithium ion battery, aluminum ion battery, carbon battery, flow battery, lead-acid battery, glass battery, magnesium ion battery, metal air battery, molten salt battery, nickel cadmium battery, nickel hydrogen battery, nickel iron battery, nickel metal hydride battery, nickel zinc battery, organic radical battery, polymer-based battery, fuel cell, lithium sulfur battery, sodium ion battery, sodium sulfur battery, and zinc ion battery. In some embodiments, the battery may be a lithium ion battery.

As shown in FIG. 5 and FIG. 6, the battery cell 1 includes a battery case 12 and an electrode assembly 11. The battery case 12 may be made of metal or non-metal material. Exemplary metal materials may include, but not limited to aluminum, aluminum alloy, or nickel-plated steel. The battery case 12 may have a hexahedral shape or other shape, and may have an opening. The electrode assembly 11 is accommodated in battery case 12. The opening of the battery case 12 is covered with a cover assembly 13. The cover assembly 13 includes a cover plate and two electrode terminals disposed on the cover plate, and the two electrode terminals is a first electrode terminal 131 and a second electrode terminal 132, respectively. The first electrode terminal 131 is a positive electrode terminal, and the second electrode terminal 132 is a negative electrode terminal. In some embodiments of the present disclosure, the first electrode terminal 131 may be a negative electrode terminal, and the second electrode terminal 132 may be a positive electrode terminal. The cover plate may be made of a metal or non-metal material. Exemplary metal materials may include, but not limited to aluminum and aluminum alloy. A size of the cover plate is adapted to a size of the opening of battery case 12. The electrode terminals may be fixed to the cover plate by means of welding or by a fixing member such as a rivet. An adapter piece 14 is disposed between the cover assembly 13 and the electrode assembly 11. A tab of the electrode assembly 11 may be electrically connected to the electrode terminals on the cover plate through the adapter piece 14. In some embodiments of the present disclosure, there may be two adapter pieces 14, which may be respectively a positive electrode adapter and a negative electrode adapter.

As shown in FIG. 6, two electrode assemblies 11 is provided in the battery case 12, and the two electrode assemblies 11 are stacked in the vertical direction (the direction indicated by arrow C). In some embodiments of the present disclosure, one electrode assembly 11 may be disposed in the battery case 12, or three or more electrode assemblies 11 may be disposed in the battery case. The plurality of electrode assemblies 11 may be stacked in the vertical direction (the direction indicated by arrow C).

As shown in FIG. 7A, FIG. 7B and FIG. 8, the electrode assembly 11 includes a first electrode sheet 111, a second electrode sheet 112, and a separator 113 disposed between the first electrode sheet 111 and the second electrode sheet 112. The first electrode sheet 111 may be a cathode piece and the second electrode sheet 112 may be an anode piece. In some other embodiments of the present disclosure, the first electrode sheet 111 may be an anode piece, and the second electrode sheet 112 may be a cathode piece. The separator 113 is an insulator disposed between the first electrode sheet 111 and the second electrode sheet 112. An active material of the cathode piece or the anode piece may be coated on a coating area of the cathode piece or the anode piece, respectively. A portion extending from the coating area of the cathode piece may serve as a cathode tab; a portion extending from the coating area of the anode piece may serve as an anode tab. The cathode tab may be connected to a positive electrode terminal on the cover assembly 13 through a cathode adapter piece, and likewise, the anode tab may be connected to a negative electrode terminal on the cover assembly 13 through an anode adapter piece.

As shown in FIG. 7A, the electrode assembly 11 is of a wound structure. The first electrode sheet 111, the separator 113, and the second electrode sheet 112 may be of a strip-shaped structure. The first electrode sheet 111, the separator 113, and the second electrode sheet 112 may be sequentially laminated and wound two or more times to form the electrode assembly 11. In some embodiments of the present disclosure, the electrode assembly 11 may be in a flat shape. When the electrode assembly 11 is fabricated, it may be first wound into a hollow cylindrical structure, and then flattened by pressure after being wound. As shown in FIG. 7B, an outer surface of the electrode assembly 11 includes two flat faces 114, and the two flat faces 114 face each other in the vertical direction (the direction indicated by arrow C), that is, the two flat faces 114 and the first surface 110 of the battery case 12 is oppositely arranged. The electrode assembly 11 is substantially a hexahedral structure, and the flat face 114 may be substantially parallel to a winding axis, and is an outer surface that has the largest area. The flat face 114 may be a relatively flat surface and is not required to be an absolutely flat surface. The two flat faces 114 are referred to in terms of a narrow faces 115 on two sides of the electrode assembly 11. In addition, an area of the flat face 114 may be larger than the narrow face 115 of the electrode assembly 11.

As shown in FIG. 8, the electrode assembly 11 has a laminated structure, that is, the electrode assembly 11 has a plurality of the first electrode sheets 111 and a plurality of the second electrode sheets 112, and the separator 113 is disposed between the first electrode sheet 111 and the second electrode sheet 112. The first electrode sheets 111, the separators 113, and the second electrode sheets 112 are stacked sequentially. Among them, the first electrode sheets 111, the separators 113, and the second electrode sheets 112 is stacked in the vertical direction (the direction indicated by arrow C).

Since the electrode assembly 11 would inevitably expand in a thickness direction of the electrode during the processes of charging and discharging, in the electrode assembly 11 of the wound structure, an expansion force is the largest in a direction perpendicular to flat face 114, while in electrode assembly 11 of the laminated structure, the expansion force is the largest in the stacking direction of the first electrode sheet 111 and the second electrode sheet 112.

In the existing technologies, in battery cells of a battery module, a direction in which an electrode assembly applies the largest expansion force to a battery case is toward the horizontal direction. A dimension of the battery module in the horizontal direction is much larger than a dimension in the vertical direction. For example, limited by a chassis height dimension of a vehicle, more battery cells need to be stacked in the horizontal direction, and the expansion force is thus accumulated in this direction. Therefore, the expansion force of the battery module in the horizontal direction is very large, so it is necessary to provide a very thick end plates on both sides of the battery module in the horizontal direction to resist the expansion force. However, an increase in the thickness of the end plate will reduce an energy density of the battery module. In some embodiments of the present disclosure, the electrode assembly 11 may be of a wound structure or a laminated structure. In the case where the electrode assembly 11 is of a wound structure, the flat face 114 faces towards the vertical direction. In the case where the electrode assembly 11 is of a laminated structure, the first electrode sheets 111 and the second electrode sheets 112 are stacked in the vertical direction. It may be seen that regardless the electrode assembly 11 adopts a wound structure or a laminated structure, a direction in which electrode assembly 11 applies the largest expansion force to battery case 12 is always toward the vertical direction.

Since the direction in which the electrode assembly 11 applies the largest expansion force to the battery case 12 is toward the vertical direction, and a number of the battery cells stacked in the vertical direction may be relatively small. As a result, the present disclosure may reduce the largest expansion force of the battery module 100 compared to the existing technologies, and thus a smaller-sized end plate may be used, thereby increasing the energy density of battery module 100.

As shown in FIG. 4, in the battery module 100, a number of layers of the battery cells 1 stacked in the vertical direction (the direction indicated by arrow C) is 2 layers. In some embodiments of the present disclosure, the number of layers of battery cells 1 stacked in the vertical direction may be about 1 to 5 layers. In some embodiments of the present disclosure, the number of layers of battery cells 1 stacked in the vertical direction may be about 2 layers or 3 layers.

In order to better balance the expansion force of the battery module 100 in the horizontal direction and in the vertical direction, in some embodiments of the present disclosure, a ratio of the dimension of the battery module 100 in the horizontal direction to the dimension of the battery module 100 in the vertical direction may be greater than or equal to about 1, 2, 3, 4, or 5. In some embodiments of the present disclosure, the ratio of the dimension of the battery module 100 in the horizontal direction to the dimension of the battery module 100 in the vertical direction may be greater than or equal to about 4.

As shown in FIG. 5 and FIG. 6, the battery case 12 of the battery cell 1 have a substantially hexahedral structure, and the battery case 12 includes two first surfaces 110 and two second surfaces 120. The two second surfaces 120 in each of the battery cells 1 face each other in the horizontal direction (for example, the length direction indicated by arrow A), and the two first surfaces 110 in each of the battery cells 1 face each other in the vertical direction (for example, the direction indicated by arrow C). The first surface 110 and the second surface 120 may be transitioned therebetween by a right angle. Similarly, the first surface 110 and the second surface 120 may be transitioned therebetween by an arc surface or a curved surface multiple bending. In some embodiments of the present disclosure, an area of the first surface 110 is larger than an area of the second surface 120.

The battery cell 1 may generate gas in the battery case 12 during the processes of charging and discharging, the generated gas exerts a force on the battery case 12, which further aggravates an outward expansion of the battery case 12. Since the area of first surface 110 of the present disclosure is larger than the area of second surface 120, and the two first surfaces 110 of battery cells 1 face each other in the vertical direction, therefore a direction in which the generated gas exerts the largest force on the battery case 12 is also in the vertical direction. Accordingly, the largest expansion force of the battery module 100 may be further reduced compared to the existing technologies.

As shown in FIG. 5 and FIG. 6, the battery case 12 further includes a third surface 130. The two first surfaces 110 and the two second surfaces 120 collectively surround the third surface 130, and the area of first surface 110 is larger than that of the third surface 130. That is, the first surface 110, the second surface 120, and the third surface 130 are substantially perpendicular with each other, and are connected to each other to form a cavity for accommodating the electrode assembly 11. The first surface 110 face the vertical direction, and the area of first surface 110 is larger than the area of second surface 120 or the third surface 130. The areas of second surface 120 and third surface 130 may be equal, or the area of the second surface 120 may be larger or smaller than the area of third surface 130.

In some embodiments of the battery pack of the present disclosure, since the top glue 230 and the bottom glue 240 may be disposed between the battery module 100 and the upper housing cover 220, and a direction of the largest expansion force of battery module 100 may be toward the vertical direction, thus the battery module 100 may be more closely attached to the top glue 230 and the bottom glue 240 so as to prevent the top glue 230 and the bottom glue 240 from falling off.

As shown in FIG. 5, the first electrode terminal 131 and the second electrode terminal 132 on the battery cell 1 may be disposed on the third surface 130 of the battery case 12, such that the bus bar 5 connected to the electrode terminals may be located on one side of the battery cell 1 where the third surface 130 is located. Since a space of the battery module 100 in the vertical direction is more valuable than a space in other directions, the arrangement of the bus bar on one side of the first surface 130 may allow better utilization of a space on the side of the battery module 100, thereby reducing the dimension of the battery module 100 in the vertical direction. In particular, when the battery module 100 is applied in a vehicle, e.g., at the bottom of the vehicle, by means of reducing the dimension of the battery module 100 in the vertical direction, a ground clearance of the bottom of the vehicle may be increased, which helps to improve the vehicle's capacity to overcome obstacles.

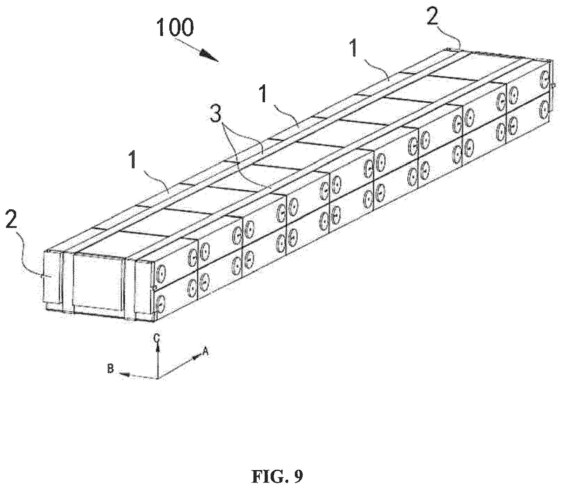

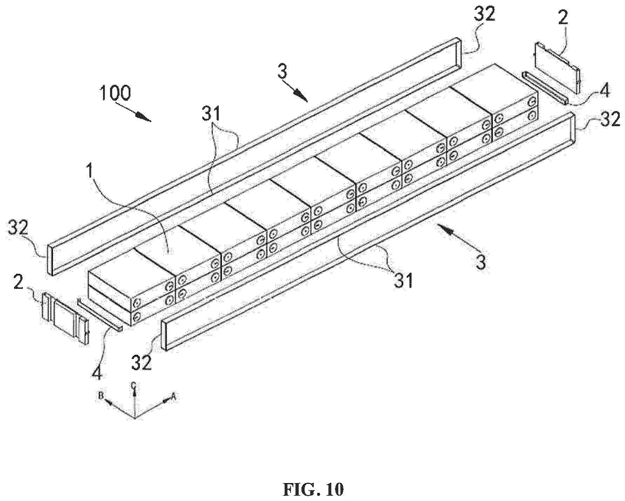

As shown in FIG. 9 and FIG. 10, in some embodiments of the present disclosure, the battery module 100 may include a tying band 3, the tying band 3 may surround an outer periphery of a plurality of the battery cells 1, and may be head-to-tail connected by itself, such that the plurality of the battery cells 1 may be tied together. The tying band 3 may be made of material including, but not limited to nylon, polypropylene and polyvinyl chloride, and may have a good flexibility. In addition, the tying band may surround the plurality of the battery cells 1 to form two long sides 31 and two short sides 32. The long side 31 and the first surface 110 face each other and extend in the horizontal direction (the length direction indicated by arrow A), and the short side 32 and the second surface 120 face each other and extend in the vertical direction (the direction indicated by arrow C). Since the expansion force of the battery module 100 in the horizontal direction (for example, the length direction indicated by arrow A) is relatively small, the strength requirement for a fixed structure of the battery cell 1 is accordingly lowered. Thus, the battery cells 1 in the battery module 100 may be bundled together with the tying band 3. In some embodiments of the present disclosure, the battery module 100 may be secured by means including, but not limited to a pressure bar, a side plate, and a bolt. The tying band 3 has advantages of a light weight, a small occupation size, and so on. Compared with other approaches, using the tying band 3 to bundle the periphery of the battery cells 1 may be advantageous for reducing the weight of battery module 100.

Optionally, the battery module 100 is provided with at least two tying bands 3, and the tying bands 3 is spaced apart in a width direction (the direction indicated by arrow B). In some embodiments of the present disclosure, a number of the tying bands 3 is 1, 2, 3, 4, or 5. In some embodiments of the present disclosure, the number of the typing bands may be equal to or more than 6.

As shown in FIG. 9 and FIG. 10, the battery module 100 further includes two end plates 2, which may be respectively disposed at two ends in the horizontal direction of the plurality of the battery cells 1 (for example, the length direction indicated by arrow A). The tying band 3 surround the outer periphery of the plurality of the battery cells 1 and the two end plates 2, that is, the tying band 3 may tie the two end plates 2 and the plurality of the battery cells 1 together. The end plate 2 may be made of metal material or non-metal materials. Exemplary metal materials may include, but not limited to aluminum and aluminum alloy. Exemplary non-metal materials may include, but not limited to a polymer material such as plastics through plastics technology. As shown in FIG. 10, the battery module 100 further includes an insulation part 4, and the insulation part 4 may be made of an insulating material including, but not limited to rubber and silicon. The insulation part 4 may include at least a first face and a second face, where the first face may be perpendicular to the second face. The insulation part 4 is arranged at the bottom of both ends of the battery module 100 in the length direction, the first face is opposed to a side surface of the battery cell 1 at one end, and the second surface is opposed to the bottom surface of the battery cell 1. The tying band 3 surrounds the outer periphery of the end plates 2, the battery cells 1 and the insulation part 4, such that the end plates 2, the battery cells 1 and the insulation part 4 are tied together. The insulation part 4 not only functions for insulation protection, but also prevents the battery cell 1 from being locally tightened by the tying band 3, in which uneven forces may be applied on a partially portion of the battery cell.

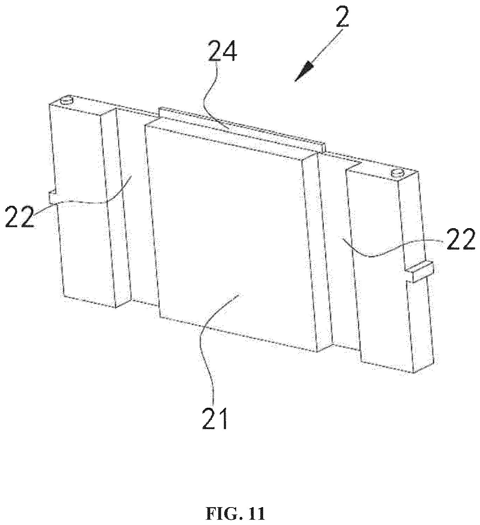

FIG. 11 is a schematic structural view of the end plate 2 according to an embodiment of the present disclosure. The end plate 2 includes a main body 21 of the end plate, a tying band limiting slot 22 and a first protrusion 24, where the tying band limiting slot 22 is disposed on the outer surface of the end plate 2, and may be formed by means of the outer surface of the end plate 2 recessing inward. The tying band limiting slot 22 extends in the vertical direction. The tying band 3 passes through the tying band limiting slot 22 such that the short side 32 of the tying band 3 may be received in the tying band limiting slot 22. The tying band 3 surrounds the outer periphery of the plurality of the battery cells 1 and the end plates 2, where a width of the tying band limiting slot 22 may be equivalent to a width of short side 32 of tying band 3, such that a position of tying band 3 may be defined.

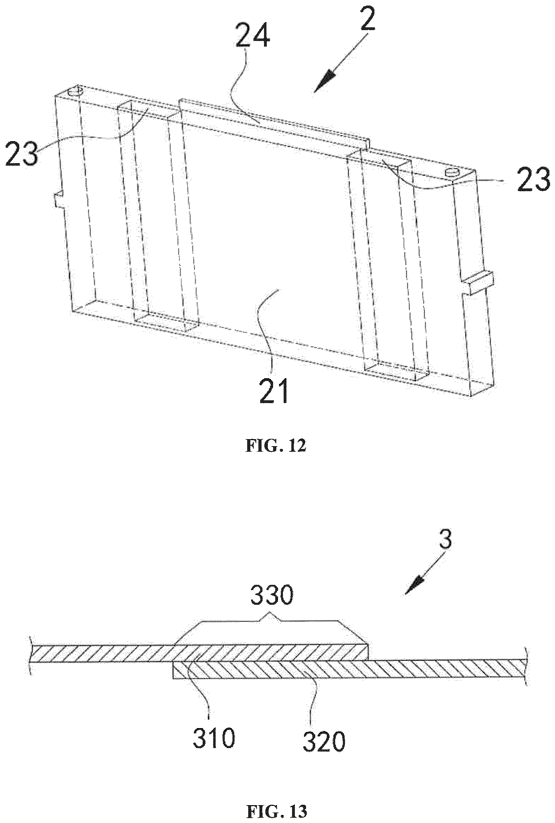

FIG. 12 is a structural schematic view of the end plate 2 according to an embodiment of the present disclosure. It is different from FIG. 11 in that a tying band limiting hole 23 is provided on the end plate 2 instead of the tying band limiting slot 22 as shown in FIG. 8. The tying band limiting hole 23 is located in the end plate 2 instead of on the surface. Similarly, the tying band limiting hole 23 may also extend in the vertical direction. The short side 32 of the tying band 3 may pass through the tying band limiting hole 23. A width of the tying band limiting hole 23 may be equivalent to a width of the short side 32 of the tying band 3, and the tying band 3 surrounds the outer periphery of the plurality of the battery cells 1 and the end plates 2.

In the end plate 2 shown in FIG. 11 and FIG. 12, a first protrusion 24 is provided at a top portion of a main body portion 21. The first protrusion 24 protrudes from the upper surface of the battery module 100 and is located between the long sides 31 of the two adjacent tying bands 3. Therefore, the first protrusions 24 on the two end plates 2 and the long sides 31 of the two adjacent tying bands 3 enclose a recess in the top portion of the battery module 100. As shown in FIG. 12, in some embodiments of the present disclosure, the top portion of the battery module 100 may be connected to the upper housing cover 220 by the top glue 230, and a recess formed by the first protrusion 24 and the long sides 31 of the tying band 3 may be used to accommodate the top glue 230 and may limit unsolidified glue and prevent the loss of the unsolidified glue.

As shown in FIG. 13, which is a cross-sectional view of a head-to-tail joint portion of the tying band 3, the tying band 3 has a first end 310 and a second end 320, where the first end 310 and second end 320 respectively refer to one end and the other end when the tying band 3 is not head-to-tail connected. The first end 310 and the second end 320 are stacked in the vertical direction (for example, the vertical direction indicated by arrow C) to form a joint portion 330 such that the joint portion 330 of the tying band 3 and the first surface 110 of the battery cell 1 face each other, that is, the joint portion 330 is located at the top portion of the battery module 100. The first end 310 and the second end 320 of the tying band 3 may be melted on the surface thereof and then joined together by means of heat pressing. In some embodiments of the present disclosure, the first end 310 and the second end 320 may also be joined together by glue or staples.

In some embodiments of the present disclosure, the first end 310 and the second end 320 are stacked in a horizontal direction (for example, the length direction indicated by arrow A) to form the joint portion 330, and the joint portion 330 and the second surface 120 of the battery cell 1 face each other, that is, the joint portion 330 is located at the end portion of the battery module 100 in the horizontal direction.

In some embodiments of the present disclosure, the battery module 100 has two or more tying bands 3, and the joint portions 330 of the tying bands 3 may be arranged in the width direction (that is, the direction indicated by arrow B). Since the joint portion 330 is formed by laminating the first end portion 310 and the second end portion 320, a thickness of joint portion 330 may be greater than a thickness of a remaining portion of the tying band 3. In addition, since the joint portions 330 of each tying band 3 may be linearly arranged (that is, arranged in the width direction and substantially on the same straight line), it may be convenient to provide an avoiding groove on the housing 20, thereby preventing the battery cells 1 from being pressed by the housing 20 at the location of the joint portion 330.

The electrode assembly will inevitably expand in a direction of the thickness of the electrode piece during processes of charging and discharging. In the existing technologies, for battery cells in a battery module, a direction in which the electrode assembly applies the largest expansion force to the battery case is the horizontal direction. Since the dimension of a battery module in the horizontal direction is much larger than that in the vertical direction. For example, it is limited by the chassis height of a vehicle, more battery cells are required to be stacked in the horizontal direction, and a large expansion force is thus accumulated in this direction. For the existing battery module, the expansion force in the horizontal direction is very large. Hence, it is necessary to provide a very thick end plate on both sides of the battery module in the horizontal direction in order to resist the expansion force, however an increase in the thickness of the end plate would reduce the energy density of the battery module. While in the solutions disclosed herein, the electrode assembly may be of the wound structure or the laminated structure; when the electrode assembly is of the wound structure, the flat face would face the vertical direction; while when the electrode assembly is of the laminated structure, the first electrode and the second electrode would be stacked in the vertical direction. Thus, regardless the electrode assembly adopts a wound structure or a laminated structure, the direction in which the electrode assembly applies the largest expansion force to the battery case is toward the vertical direction. Since the direction in which the electrode assembly applies the largest expansion force to the battery case is toward the vertical direction; the number of battery cells stacked in the vertical direction is the lowest. Therefore, compared with the existing technologies, the disclosed solutions can reduce the largest expansion force of the battery module, so that a smaller-sized end plate can be used, thereby increasing the energy density of the battery module.

It should be noted that, the embodiments which fall under the scope of the claims are considered embodiments of the present disclosure. Other embodiments are examples useful for understanding the present disclosure.

## Claims

1. A battery module (100), comprising:
a plurality of battery cells (1) arranged in a horizontal direction (A), and
a plurality of bus bars (5) electrically connected to the plurality of battery cells (1);
each of the battery cells (1) comprising: a battery case (12), and an electrode assembly (11) accommodated in the battery case (12);
wherein the electrode assembly (11) comprising: a first electrode sheet (111), a second electrode sheet (112), and a separator (113) disposed between the first and second electrode sheets (111, 112);
wherein the electrode assembly (11) has a wound structure, an outer surface of the electrode assembly (11) comprises two flat faces that face each other in a vertical direction (C), or
the electrode assembly (11) has a laminated structure, the first and second electrode sheets (111, 112) and the separator (113) are stacked in the vertical direction (C);
wherein a dimension of the battery module (100) in the horizontal direction (A) is larger than a dimension in the vertical direction (C); and
the battery module (100) further comprises:
a tying band (3), and
two end plates (2);
wherein the tying band (3) comprises two long sides (31) facing a first surface (110) and extending in a horizontal direction (B), and two short sides (32) facing a second surface (120) and extending in the vertical direction (C);
wherein the two end plates (2) respectively are arranged at two ends of the plurality of battery cells (1) in the thehorizontal direction (B), and the tying band (3) surrounds an outer periphery of the plurality of battery cells (1) and the two end plates (2);
wherein a surface of the two end plates (2) away from the plurality of the battery cells (1) is provided with a tying band limiting slot (22), the tying band limiting slot (22) extends along the vertical direction (C), and the two short sides (32) of the tying band (3) are received in the tying band limiting slot (22); or
the two end plates (2) are internally provided with a tying band limiting hole, the tying band limiting hole extends along the vertical direction (C), and the two short sides (32) of the two tying bands (3) pass through the tying band limiting hole.

2. The battery module (100) according to claim 1, wherein the battery case (12) comprises two first surfaces (110) and two second surfaces (120), an area of the first surface (110) is larger than an area of the second surface (120), the two second surfaces (120) of each of the battery cells (1) face each other in the horizontal direction (B), and the two first surfaces (110) of each of the battery cells (1) face each other in the vertical direction (C).

3. The battery module (100) according to claim 1, wherein each of the battery cells (1) comprises a plurality of the electrode assemblies (11) stacked in the vertical direction (C).

4. The battery module (100) according to claim 1, wherein in the battery module (100), the number of layers of the battery cells (1) stacked in the vertical direction (C) is about one layer to five layers, preferably two or three layers.

5. The battery module (100) according to claim 2, wherein the battery case (12) further comprises a third surface (130), the two first surfaces (110) and the two second surfaces (120) collectively surround the third surface (130), and the area of the first surface (110) is larger than an area of the third surface (130).

6. The battery module (100) according to claim 5, wherein the battery cell (1) further comprises a first and a second electrode terminals (131, 132), the first and the second electrode terminals (131, 132) are both arranged on the third surface (130).

7. The battery module (100) according to any one of claims 1 to 6, preferably comprising at least two tying bands spaced apart.

8. The battery module (100) according to claim 7, wherein
the tying band (3) comprises a first and a second ends (310, 320), the first and the second ends (310, 320) are stacked in the vertical direction (C) to form a joint portion (330), and the joint portion (330) and the first surface (110) face each other; or
the tying band (3) comprises a first and a second ends (310, 320), the first and the second ends (310, 320) are stacked in the horizontal direction (A) to form a joint portion (330), and the joint portion (330) and the second surface (120) face each other.

9. The battery module (100) according to claim 8, wherein the joint portions (330) of the at least two tying bands (3) are arranged in a straight line.

10. The battery module (100) according to claim 1, wherein a ratio of the dimension of the battery module (100) in the horizontal direction (A) to the dimension of the battery module (100) in the vertical direction (C) is greater than or equal to four.

11. A battery pack (200), comprising:
a housing (20) having an accommodating chamber (250); and
the plurality of the battery modules (100) according to any one of claims 1 to 10,
wherein the plurality of battery modules (110) are arranged in the accommodating chamber (250).

12. A vehicle, comprising:
a vehicle body; and
the battery pack (200) according to claim 11,
wherein the battery pack (200) is arranged in the vehicle body.

## Patentansprüche

1. Batteriemodul (100), das Folgendes umfasst:
eine Vielzahl von Batteriezellen (1), die in einer horizontalen Richtung (A) angeordnet sind, und
eine Vielzahl von Sammelschienen (5), die elektrisch mit der Vielzahl von Batteriezellen (1) verbunden sind;
wobei jede der Batteriezellen (1) Folgendes umfasst: ein Batteriegehäuse (12) und eine Elektrodenanordnung (11), die im Batteriegehäuse (12) untergebracht ist;
wobei die Elektrodenanordnung (11) Folgendes umfasst: eine erste Elektrodenlage (111), eine zweite Elektrodenlage (112) und einen Separator (113), der zwischen der ersten und der zweiten Elektrodenlage (111, 112) platziert ist;
wobei die Elektrodenanordnung (11) eine gewickelte Struktur aufweist, eine Außenfläche der Elektrodenanordnung (11) zwei Flachseiten umfasst, die einander in einer vertikalen Richtung (C) zugewandt sind, oder
die Elektrodenanordnung (11) weist eine laminierte Struktur auf, die erste und die zweite Elektrodenlage (111, 112) und der Separator (113) sind in der vertikalen Richtung (C) gestapelt;
wobei eine Abmessung des Batteriemoduls (100) in der horizontalen Richtung (A) größer ist als eine Abmessung in der vertikalen Richtung (C); und
das Batteriemodul (100) umfasst ferner Folgendes:
ein Schnürband (3), und
zwei Endplatten (2);
wobei das Schnürband (3) zwei lange Seiten (31) umfasst, die einer ersten Fläche (110) zugewandt sind und sich in eine horizontale Richtung (B) erstrecken, und zwei kurze Seiten (32), die einer zweiten Fläche (120) zugewandt sind und sich in die vertikale Richtung (C) erstrecken;
wobei die zwei Endplatten (2) jeweils an zwei Enden der Vielzahl von Batteriezellen (1) in der horizontalen Richtung (B) angeordnet sind und das Schnürband (3) einen Außenumfang der Vielzahl von Batteriezellen (1) und die beiden Endplatten (2) umgibt;
wobei eine Fläche der zwei Endplatten (2) von der Vielzahl der Batteriezellen (1) weg mit einem Schnürbandbegrenzungsschlitz (22) versehen ist, wobei sich der Schnürbandbegrenzungsschlitz (22) entlang der vertikalen Richtung (C) erstreckt, und die zwei kurzen Seiten (32) des Schnürbands (3) in den Schnürbandbegrenzungsschlitz (22) aufgenommen sind; oder
die zwei Endplatten (2) sind intern mit einem Schnürbandbegrenzungsloch versehen, das Schnürbandbegrenzungsloch erstreckt sich entlang der vertikalen Richtung (C) und die zwei kurzen Seiten (32) der zwei Schnürbänder (3) verlaufen durch das Schnürbandbegrenzungsloch.

2. Batteriemodul (100) nach Anspruch 1, wobei das Batteriegehäuse (12) zwei erste Flächen (110) und zwei zweite Flächen (120) umfasst, ein Bereich der ersten Fläche (110) größer ist als ein Bereich der zweiten Fläche (120), die zwei zweiten Flächen (120) von jeder der Batteriezellen (1) einander in der horizontalen Richtung (B) zugewandt sind und die zwei ersten Flächen (110) jeder der Batteriezellen (1) einander in der vertikalen Richtung (C) zugewandt sind.

3. Batteriemodul (100) nach Anspruch 1, wobei jede der Batteriezellen (1) eine Vielzahl der Elektrodenanordnungen (11), die in der vertikalen Richtung (C) gestapelt sind, umfasst.

4. Batteriemodul (100) nach Anspruch 1, wobei die Anzahl von Schichten der Batteriezellen (1) im Batteriemodul (100), die in der vertikalen Richtung (C) gestapelt sind, ungefähr eine Schicht bis fünf Schichten, vorzugsweise zwei oder drei Schichten, beträgt.

5. Batteriemodul (100) nach Anspruch 2, wobei das Batteriegehäuse (12) ferner eine dritte Fläche (130) umfasst, die zwei ersten Flächen (110) und die zwei zweiten Flächen (120) zusammen die dritte Fläche (130) umgeben und der Bereich der ersten Fläche (110) größer ist als ein Bereich der dritten Fläche (130) .

6. Batteriemodul (100) nach Anspruch 5, wobei die Batteriezelle (1) ferner einen ersten und einen zweiten Elektrodenanschluss (131, 132) umfasst, der erste und der zweite Elektrodenanschluss (131, 132) beide auf der dritten Fläche (130) angeordnet sind.

7. Batteriemodul (100) nach einem der Ansprüche 1 bis 6, das vorzugsweise mindestens zwei beabstandete Schnürbänder umfasst.

8. Batteriemodul (100) nach Anspruch 7, wobei
das Schnürband (3) ein erstes und ein zweites Ende (310, 320) umfasst, das erste und das zweite Ende (310, 320) in der vertikalen Richtung (C) gestapelt sind, um einen Kopplungsabschnitt (330) zu bilden, und der Kopplungsabschnitt (330) und die erste Fläche (110) einander zugewandt sind; oder
das Schnürband (3) ein erstes und ein zweites Ende (310, 320) umfasst, das erste und das zweite Ende (310, 320) in der horizontalen Richtung (A) gestapelt sind, um einen Kopplungsabschnitt (330) zu bilden, und der Kopplungsabschnitt (330) und die zweite Fläche (120) einander zugewandt sind.

9. Batteriemodul (100) nach Anspruch 8, wobei die verbundenen Abschnitte (330) der mindestens zwei Schnürbänder (3) in einer geraden Linie angeordnet sind.

10. Batteriemodul (100) nach Anspruch 1, wobei ein Verhältnis der Abmessung des Batteriemoduls (100) in der horizontalen Richtung (A) zur Abmessung des Batteriemoduls (100) in der vertikalen Richtung (C) größer als oder gleich vier ist.

11. Batteriepack (200), das Folgendes umfasst:
ein Gehäuse (20) mit einer Aufnahmekammer (250); und
die Vielzahl von Batteriemodulen (100) nach einem der Ansprüche 1 bis 10,
wobei die Vielzahl von Batteriemodulen (110) in der Aufnahmekammer (250) angeordnet sind.

12. Fahrzeug, das Folgendes umfasst:
eine Fahrzeugkarosserie; und
das Batteriepack (200) nach Anspruch 11,
wobei das Batteriepack (200) in der Fahrzeugkarosserie angeordnet ist.

## Revendications

1. Module de batterie (100) comprenant :
une pluralité d'éléments de batterie (1) agencés dans une direction horizontale (A), et
une pluralité de barres omnibus (5) électriquement raccordée à la pluralité d'éléments de batterie (1) ;
chacun des éléments de batterie (1) comprenant : un boîtier de batterie (12) et un ensemble d'électrodes (11) logé dans le boîtier de batterie (12) ;
dans lequel l'ensemble d'électrodes (11) comprenant : une première feuille d'électrode (111), une seconde feuille d'électrode (112) et un séparateur (113) disposé entre les première et seconde feuilles d'électrode (111, 112) ;
dans lequel l'ensemble d'électrodes (11) a une structure enroulée, une surface externe de l'ensemble d'électrodes (11) comprend deux faces plates qui se font face dans une direction verticale (C), ou
l'ensemble d'électrodes (11) a une structure stratifiée, les première et seconde feuilles d'électrode (111, 112) et le séparateur (113) sont empilés dans la direction verticale (C) ;
dans lequel une dimension du module de batterie (100) dans la direction horizontale (A) est supérieure à une dimension dans la direction verticale (C) ; et
le module de batterie (100) comprend en outre :
une bande d'attache (3), et
deux plaques d'extrémité (2) ;
dans lequel la bande d'attache (3) comprend deux côtés longs (31) faisant face à une première surface (110) et s'étendant dans une direction horizontale (B), et deux côtés courts (32) faisant face à une deuxième surface (120) et s'étendant dans la direction verticale (C) ;
dans lequel les deux plaques d'extrémité (2) sont respectivement agencées aux deux extrémités de la pluralité d'éléments de batterie (1) dans la direction horizontale (B), et la bande d'attache (3) entoure une périphérie externe de la pluralité d'éléments de batterie (1) et les deux plaques d'extrémité (2) ;
dans lequel une surface des deux plaques d'extrémité (2) à l'opposé de la pluralité d'éléments de batterie (1) est prévue avec une fente de limitation de bande d'attache (22), la fente de limitation de bande d'attache (22) s'étend le long de la direction verticale (C), et les deux côtés courts (32) de la bande d'attache (3) sont reçus dans la fente de limitation de bande d'attache (22) ; ou
les deux plaques d'extrémité (2) sont intérieurement prévues avec un trou de limitation de bande d'attache, le trou de limitation de bande d'attache s'étend le long de la direction verticale (C), et les deux côtés courts (32) des deux bandes d'attache (3) passent à travers le trou de limitation de bande d'attache.

2. Module de batterie (100) selon la revendication 1, dans lequel le boîtier de batterie (12) comprend deux premières surfaces (110) et deux deuxièmes surfaces (120), une zone de la première surface (110) est supérieure à une zone de la deuxième surface (120), les deux deuxièmes surfaces (120) de chacun des éléments de batterie (1) se font face dans la direction horizontale (B), et les deux premières surfaces (110) de chacun des éléments de batterie (1) se font face dans la direction verticale (C).

3. Module de batterie (100) selon la revendication 1, dans lequel chacun des éléments de batterie (1) comprend une pluralité d'ensembles d'électrodes (11) empilés dans la direction verticale (C).

4. Module de batterie (100) selon la revendication 1, dans lequel dans le module de batterie (100), le nombre de couches d'éléments de batterie (1) empilées dans la direction verticale (C) représente environ d'une couche à cinq couches, de préférence deux ou trois couches.

5. Module de batterie (100) selon la revendication 2, dans lequel le boîtier de batterie (12) comprend en outre une troisième surface (130), les deux premières surfaces (110) et les deux deuxièmes surfaces (120) entourent collectivement la troisième surface (130), et la zone de la première surface (110) est supérieure à une zone de la troisième surface (130).

6. Module de batterie (100) selon la revendication 5, dans lequel l'élément de batterie (1) comprend en outre une première et une seconde borne d'électrode (131, 132), la première et la seconde borne d'électrode (131, 132) sont toutes deux agencées sur la troisième surface (130).

7. Module de batterie (100) selon l'une quelconque des revendications 1 à 6, comprenant de préférence au moins deux bandes d'attache espacées.

8. Module de batterie (100) selon la revendication 7, dans lequel :
la bande d'attache (3) comprend une première et une seconde extrémité (310, 320), la première et la seconde extrémité (310, 320) sont empilées dans la direction verticale (C) pour former une partie de joint (330), et la partie de joint (330) et la première surface (110) se font face ; ou
la bande d'attache (3) comprend une première et une seconde extrémité (310, 320), la première et la seconde extrémité (310, 320) sont empilées dans la direction horizontale (A) afin de former une partie de joint (330), et la partie de joint (330) et la deuxième surface (120) se font face.

9. Module de batterie (100) selon la revendication 8, dans lequel les parties de joint (330) des au moins deux bandes d'attache (3) sont agencées en ligne droite.

10. Module de batterie (100) selon la revendication 1, dans lequel un rapport de la dimension du module de batterie (100) dans la direction horizontale (A) sur la dimension du module de batterie (100) dans la direction verticale (C) est supérieur ou égal à quatre.

11. Bloc-batterie (200) comprenant :
un boîtier (20) ayant une chambre de logement (250) ; et
la pluralité de modules de batterie (100) selon l'une quelconque des revendications 1 à 10,
dans lequel la pluralité de modules de batterie (110) est agencée dans la chambre de logement (250).

12. Véhicule comprenant :
un corps de véhicule ; et
le bloc-batterie (200) selon la revendication 11,
dans lequel le bloc-batterie (200) est agencé dans le corps de véhicule.
